# EUROPEAN PATENT SPECIFICATION

(11) **EP 4 112 336 B1**
(45) Date of publication and mention of the grant of the patent: **08.04.2026**
(21) Application number: 21182786.0
(22) Date of filing: 30.06.2021
(51) Int. Cl.: B60D 1/02, B62K 27/12, B62K 27/14

(54) **CONNECTOR, TRAILER ELEMENT, AND TRAILER**
VERBINDER, ANHÄNGERELEMENT UND ANHÄNGER
CONNECTEUR, ÉLÉMENT DE REMORQUE ET REMORQUE

(43) Date of publication of application: 04.01.2023
(73) Proprietor: HTS Hans Torgersen & Sønn AS, 3535 Krøderen (NO)
(72) Inventor: MONKEN, Olavo, 3514 HD Utrecht (NL); VAN DER LEEUW, Jesse, 1072 AH Amsterdam (NL)
(74) Representative: Meissner Bolte Partnerschaft mbB

(56) References cited:
- CN-A- 110 744 976
- DE-A1- 102014 112 172
- US-A- 3 759 549
- US-A- 443 967
- US-A1- 2011 193 320

## Description

The invention relates to a connector responsible for connecting a trailer element, such as a towbar, to a towing vehicle, such as a bicycle or motorised vehicle, allowing a user to drag the trailer behind the vehicle. The invention also relates to a trailer element comprising such a connector. The invention further relates to a trailer comprising such a trailer element.

Connectors for trailer elements comprising a pin and socket type connector are known. DE102014112172 A1 discloses a prior art towbar connector comprising a socket, a connecting bolt to be inserted into the socket, and a locking system operatable with a slide switch. US 2011/193320 A1 discloses a connector known in the prior art.

A drawback with these known connectors is that there is a chance of unintentional or undesired disconnection of the connecting bolt from the socket during use due to the influence of the usage environment.

It is an object of the present invention to provide connectors which overcome this drawback, and more specifically to provide connectors with improved safety against unintentional or undesired disconnection during use.

This object is achieved by the subject matter of claim 1. Preferred embodiments are disclosed in the depending claims. In particular, the present invention provides a connector for connecting a trailer element to a towing vehicle component, comprising a first part comprising a connecting pin, the first part adapted to be mounted on either one of a trailer element and the towing vehicle component, a second part comprising a socket adapted to be mounted on the other of the trailer element and the towing vehicle component and configured to receive the connecting pin, and the second part further comprising a locking element configured to releasably lock the connecting pin to the socket. The connector further comprises an access restriction means configured to limit access to the locking element for the next locking or unlocking action between the connecting pin and the socket by, for example, a user. For example, the access restriction means serves to limit access to the locking element during locking, providing an increased level of protection against unintentional or undesired disconnection of the connecting pin from the socket due to external collisions, vibration, tampering or the like. In a preferred embodiment, the access restriction means comprises a cover, the cover also performing a secondary task of shielding the safety critical components within the connector, from the surrounding environment, such as direct sunlight exposure, direct rain, dust, sand and other debris that would otherwise get easily lodged in the cavities of the connector.

Further improved safety can be obtained if the cover is so configured as to require a user to move the cover, preferably against a spring bias, to its retracted state and maintain the cover in said retracted state prior to disconnection of the connecting pin from the socket.

Good condition can be maintained if the locking element is only accessible when the cover is moved to the retracted state, preferably against the spring bias.

Improved operability can be obtained if the locking element is so configured as not to require a user to move the cover to the retracted state prior to connection of the connecting pin to the socket.

### DETAILED DESCRIPTION OF THE FIGURES

Detailed discussion of preferred embodiments directed to one of ordinary skill in the art are set forth in the specification, which makes reference to the appended figures, in which:
Fig. 1 depicts an example trailer according to an embodiment of the present invention;
Fig. 2 depicts an example trailer element according to an embodiment of the present invention, the trailer element comprising an example connector according to an embodiment of the present invention;
Fig. 3 depicts an exploded perspective view of the trailer element of Fig. 2;
Fig. 4 depicts a cross section of the trailer element of Fig. 2 along its longitudinal axis;
Fig. 5 depicts another cross section of the trailer element of Fig. 2 along its longitudinal axis;
Figs. 6 and 7 depict a disconnecting operation of the connector of Fig. 2, illustrating that a locking element is pushed into a socket while a spring-loaded cover is moved against the spring bias;
Figs. 8 to 10 depict a connection operation of the connector of Fig. 2, illustrating that a connecting pin can only be inserted into the socket while the spring-loaded cover is moved against the spring bias;
Figs. 11 and 12 depict another example connector according to the present invention.

### DETAILED DESCRIPTION

Reference now will be made in detail to embodiments, one or more examples of which are illustrated in the drawings. Each example is provided by way of explanation of the embodiments, not limitation of the present disclosure. In fact, it will be apparent to those skilled in the art that various modifications and variations can be made to the embodiments without departing from the scope or spirit of the present disclosure. For instance, features illustrated or described as part of one embodiment can be used with another embodiment to yield a still further embodiment. Thus, it is intended that aspects of the present disclosure cover such modifications and variations.

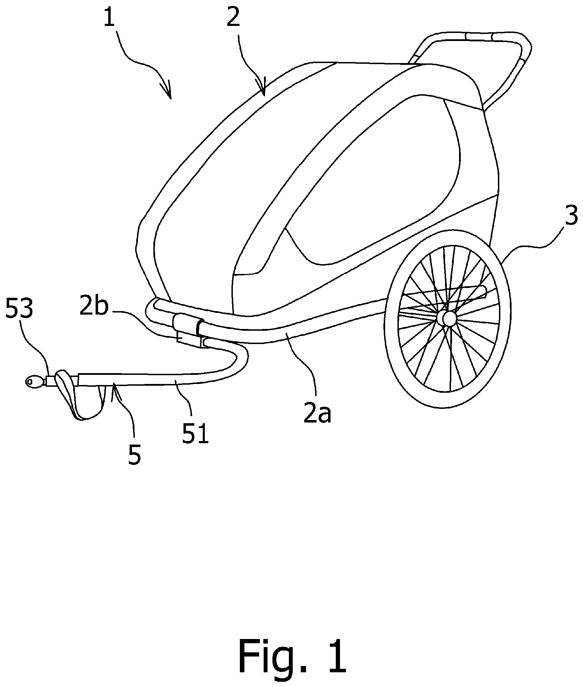

Fig. 1 depicts an example trailer 1 according to an embodiment of the present invention. The depicted trailer 1 is a bicycle trailer to be attached to a bicycle component such as a wheel axle. The present invention, however, is applicable to a trailer to be towed by a motorised vehicle such as a two-wheeled motor vehicle, three-wheel motor vehicle, or four-wheel motor vehicle. The depicted trailer may be used for transportation of children, luggage, animals, or the like on public roads with light traffic, sidewalks, smooth paths, and rough roads.

The depicted trailer 1 comprises a trailer body 2, two or more wheels 3 which may be quick releasable, and an example trailer element 5 according to the present invention. The trailer element 5 may be a towbar and attached to a frame 2a of the trailer body 2 by an attachment 2b. The trailer element 5 may be attached on the front of the trailer body 2 and extends therefrom toward a towing vehicle (not shown).

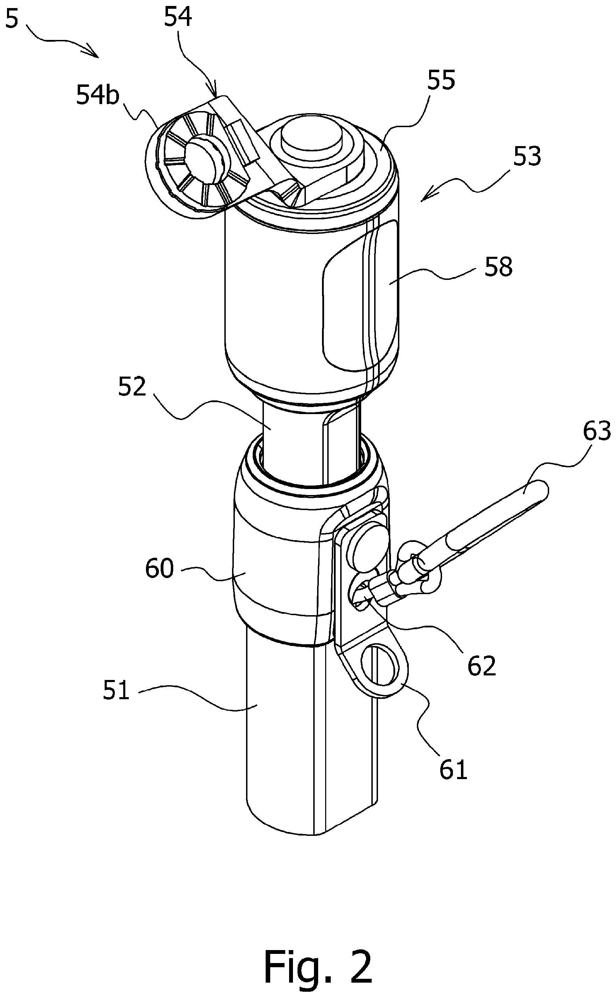

Fig. 2 depicts the trailer element 5 of Fig. 1 in detail. The trailer element 5 comprises a main body 51 to be attached to the frame 2a of the trailer body 2 at its first end, a flexible link 52 attached to a second end of the main body 51, and an example connector 53 according to the present invention.

The main body 51 may be made of rigid material such as aluminium, steel, or fibre reinforced plastic. The main body 51 may be in the form of pipe. The main body 51 may be formed by extrusion. For simplicity, only the second end of the main body 51, which is to be connected to a towing vehicle via the connector 53 is shown in Fig. 2.

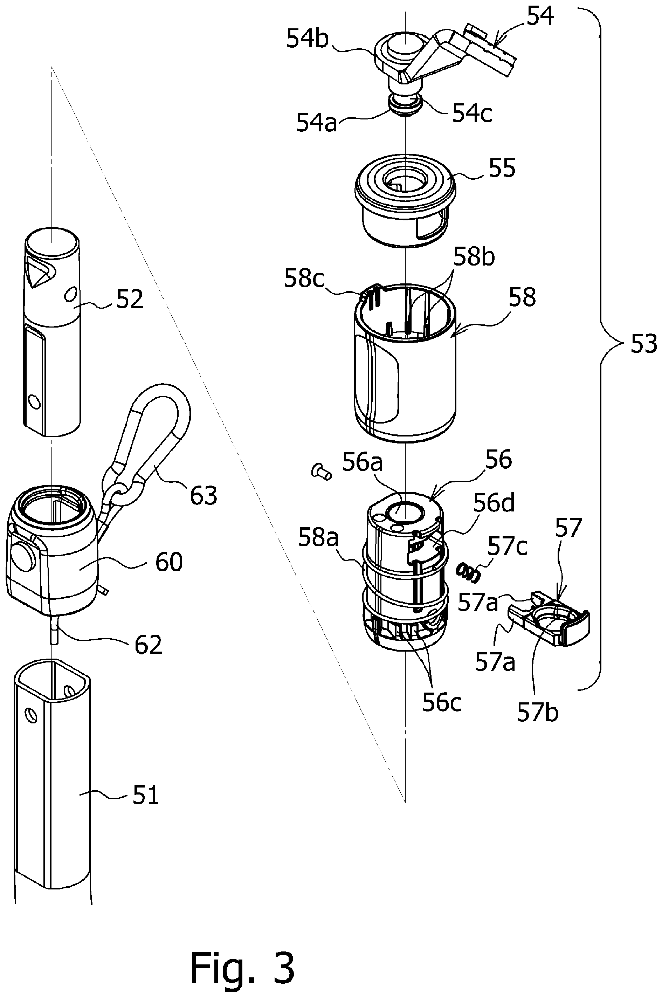

Fig. 3 depicts an exploded perspective view of the trailer element 5 of Fig. 2. The connector 53 comprises a first part comprising a connecting pin 54a, the first part adapted to be mounted on either one of the trailer element 5 and the towing vehicle component, and a second part comprising a socket 56 adapted to be mounted on the other of the trailer element and the towing vehicle component and configured to receive the connecting pin 54a, the second part further comprising a locking element 57 configured to relesably lock the connecting pin 54a to the socket 56. The connector 53 according to the present invention further includes an access restriction means configured to limit access to the locking element 57 for the next locking or unlocking action between the connecting pin 54a and the socket 56 by, for example, a user. Specifically, the access restriction means serves to physically prevent the locking element 57 from being operated and/or make the locking element 57 invisible in a certain condition. In some preferable embodiments, the access restriction means includes a cover 58. The cover 58 may be so configured as to move with respect to the socket 56 or to be detachably attached to the socket 56 to limit access to the locking element 57. The cover 58 may be retained by the socket 56. The cover 58 can at least partially cover the locking element 57. Preferably, the cover 58 can fully cover the locking element 57. The cover 58 may have any shape so long as it restricts an access to the locking element 57. In one example, the cover 58 may have a curved surface extending along the periphery of the socket 56 or may be a curved plate. In the illustrated embodiment, the cover 58 is in the form of a sleeve or cylinder. The sleeve or cylinder may define a through hole in which the socket 56 is contained. In the illustrated embodiment, the sleeve or cylinder is shaped to have a circular cross section, but is not limited to this, and may be shaped to correspond to the periphery of the socket 56. In other examples, the sleeve or cylinder may have a triangular, rectangular, or polygonal cross section. The cover 58 may be configured to slide with respect to the socket 56 to limit access to the locking element while the locking element 57 is so arranged that it locks the connecting pin 54a to the socket 56.

The example connector 53 may further include a connecting pin assembly 54 with the connecting pin 54a, and a cap 55. The cap 55 may be omitted in some embodiments. The depicted example connector 53 is designed in such a way that the connecting pin assembly 54 is to be mounted to a towing vehicle, whereas the socket 56 is to be mounted to the trailer element 51. This arrangement, however, may be opposite to each other; the connecting pin assembly 54 may be mounted to the trailer element 51, whereas the socket 56 may be mounted to a towing vehicle.

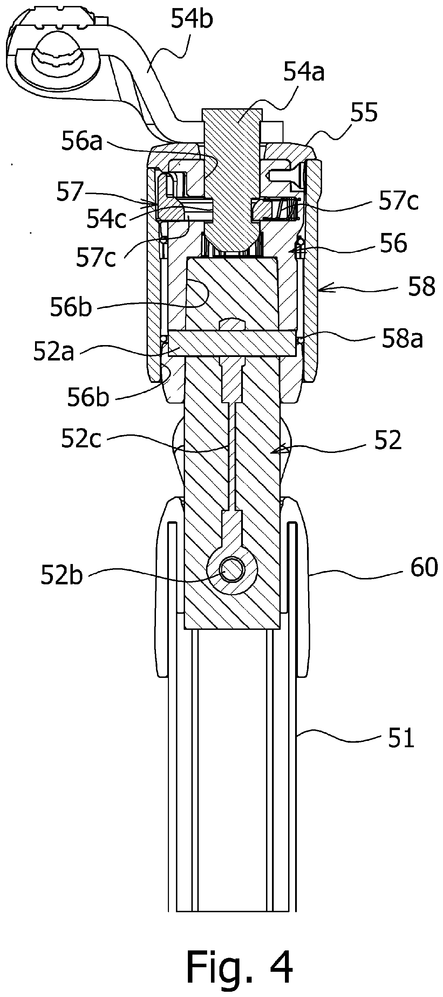

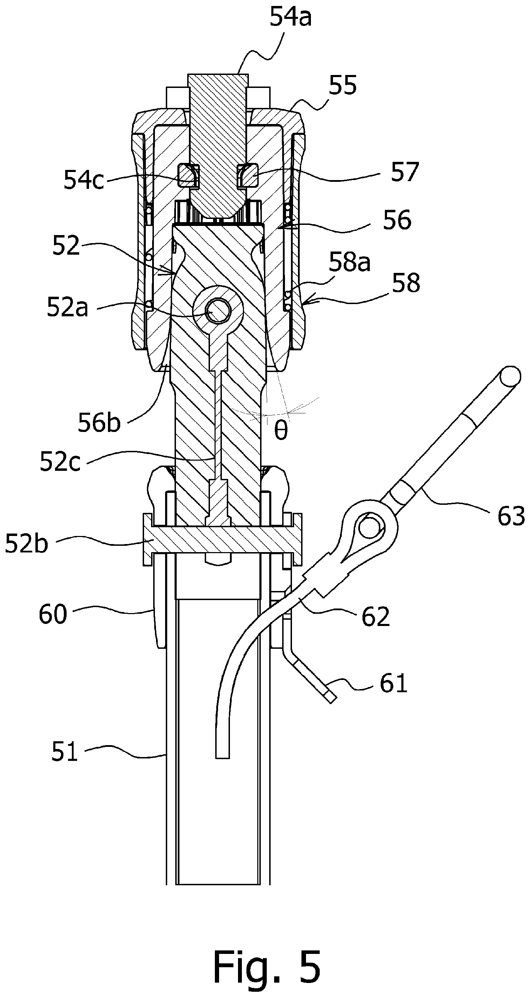

With reference to Figs. 4 and 5, two different cross sections of the trailer element 5 along its longitudinal axis are depicted. The connecting pin assembly 54 includes the connecting pin 54a and an attachment 54b that is used to connect the pin 54a to the towing vehicle. The connecting pin 54a and the attachment 54ba are welded to each other in the illustrated example, but may be formed as a single part in some embodiments. The pin 54a may include a circumferential groove 54c to be engaged with the locking element 57 to lock the connecting pin 54a to the socket 56. Additionally or alternatively, the connecting pin 54a may include a lateral hole into which the locking element 57 is inserted to lock the connecting pin 54a to the socket 56 (not shown).

The socket 56 includes a first hole 56a into which the connecting pin 54a is to be inserted. The first hole 56a may be centred and extend in the direction of the longitudinal axis of the socket 56 and pin 54a.

The socket 56 may further include a second hole 56b into which an end of the flexible link 52 is to be inserted. The second hole 56b may also be centred and extend in the direction of the longitudinal axis of the socket 56 and pin 54a. The end of the flexible link 52 inserted into the second hole 56b may be secured to the socket 56 by a fixing pin 52a. The other end of the flexible link 52 may be secured to the second end of the main body 51 of the trailer element 5 by another fixing pin 52b. These fixing pins 52a and 52b may be connected via a wire 52c, preferably a metal wire. The wire 52c may be embedded in the flexible link 52 and extend in the direction of the longitudinal axis of the connector 53 to reinforce the flexible link 52. Preferably, the flexible link 52 may be rotatable at the both ends around the fixing pins 52a, 52b, respectively. More preferably, when viewed in the longitudinal direction, the fixing pins 52a, 52b intersect each other, preferably at 90 degrees. This provides improved flexibility in any direction.

In this way, the socket 56 can be attached to the second end of the main body 51 of the trailer element 5 via the flexible link 52. A towbar sleeve 60, which includes a safety ring 61 through which a steel cable 62 with a carabiner hook 63 passes, may also be provided between the second end of the main body 51 and the flexible link 52.

The cap 55 may be fixed to the distal end of the socket 56 using a screw, for example. The cap 55 may be welded to the distal end of the socket 56. The cap 55 may function as a stopper for the slidable cover 58. Further, the cap 55 may cooperate with the cover 58 to prevent sand, dust, etc., from entering. Alternatively, one or more protrusions protruding in the radial direction of the socket 56 and acting as a stopper for the slidable cover 58 may be attached to, or integrally formed in, the distal end of the socket 56.

The flexible link 52 comprises flexible material such as thermoplastic polyurethane to give some degree of freedom so that, when the towing vehicle turns, the trailer body 2 can follow it. This part is flexible and can bend to allow for the necessary degree of freedom. However, constant flexing of the link 52 may tend to create and accumulate internal stress, leading to a crack, and eventually to breakage. In order to reduce this wear on the link 52 and thus offer an extra layer of safety, the second hole 56b of the socket 56 may include a curved or tapered surface whose diameter increases toward its opening end (see Fig. 5). The curved or tapered surface gives the link 52 some freedom to hinge around the fixing pin 52a for a few degrees before the link 52 is required to deform in an elastic manner. The angle θ of the curved surface (specifically, the tangential line at its midpoint in the longitudinal direction) or of the tapered surface with respect to the longitudinal axis of the socket 56 is preferably between approx. 10 degrees and approx. 20 degrees, more preferably approx. 15 degrees.

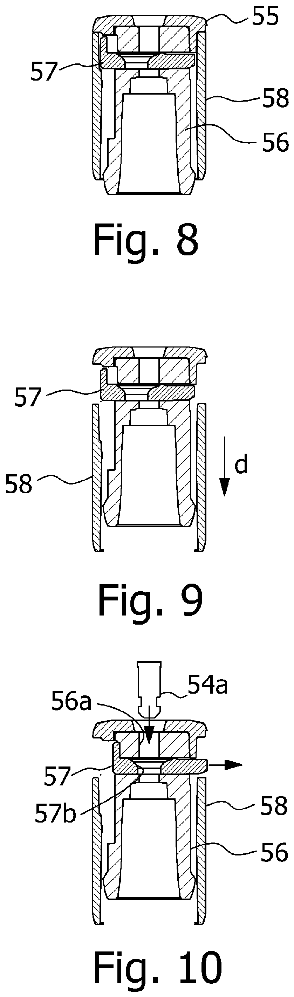

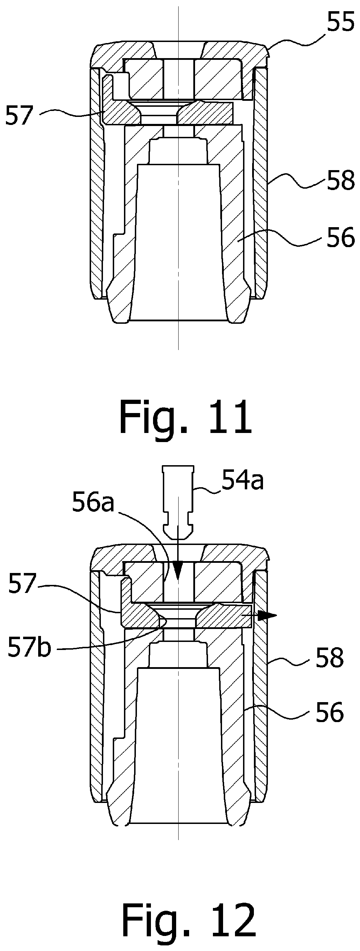

As can be seen in Fig. 3, the example socket 56 has one or more spring supports 56c in the form of rib, for example. The example socket 56 may further include a lateral hole 56d which is shaped and sized to retain the locking element 57 in a slidable manner therewithin. The lateral hole 56d runs transversely to the longitudinal axis of the socket 56 so that the locking element 57 slides between its retreat position and its advance position, the direction of slide being in the direction transverse to the longitudinal axis of the connecting pin 54a and socket 56. The lateral hole 56d may partially run through the side wall of the socket 56 so that one or more extensions 57a of the locking element 57 can pass through. The one or more extensions 57a are configured, in the case of incomplete or improper connection of the connecting pin 54 and the socket 56, to prevent the slidable cover 58 from fully closing, preferably with the aid of a spring bias as described later. The one or more extensions 57a are shaped and sized, at the position where the locking element 57 advances, to protrude beyond the side wall of the socket 56. The function of extensions 57a will also be described later in relation to Figs. 8 to 10 and in comparison with an example of Figs. 11 and 12.

As can also be seen in Fig. 3, the locking element 57 has an engagement hole 57b into which the connecting pin 54a is to be inserted. Preferably, the engagement hole 57b defines an introduction surface on the side facing the connection pin 54a and in the form of a cone or paraboloid surface. The peripheral edge of the engagement hole 57b is configured to engage with the circumferential groove 54c of the connecting pin 54a at the retreat position of the locking element 57, for example. The lock element 57 preferably includes a button portion on its side, suitable for operation by a user. When a user pushes the locking element 57 (the button portion) to its advance position, the centres of the connecting pin 54a and the engagement hole 57b become to align with each other, releasing the engagement of the connecting pin 54a and the engagement hole 57b. In a preferable embodiment, a spring 57c is arranged between the front end of the locking element 57 and the end wall of the lateral hole 56d of the socket 56 facing the front end of the locking element 57 to push the locking element 57 toward the retreat position to maintain the engagement state of the locking element 57 and the connecting pin 54a.

Again, the cover 58 by way of example is shaped and sized to accommodate the socket 56 and configured to slide in the direction of the longitudinal axis of the connector 53. The cover 58 functions to limit access to the locking element 57 for the next locking or unlocking action between the connecting pin 54a and the socket 56, including during use. Preferably, the cover 58 is spring-loaded toward a position in which the cover 58 can limit the access to the locking element 57. To this end, a spring 58a may be arranged between the socket 56 and the cover 58 so as to urged the cover 58 toward the cap 55 to close. The cover 58 may have one or more spring supports 58b on its inner periphery. The spring support 58b may be in the form of rib. In this way, the spring 58a is sandwiched between the spring supports 56c on the outer periphery of the socket 56 and the spring supports 58b on the inner periphery of the cover 58. The cover 58 allows for the access to the locking element 57 when it is moved or pulled in the direction away from the distal end of the socket 56, preferably against the spring bias of the spring 58a. Although the depicted cover 58 is spring-loaded by the spring 58a, the present invention is not limited thereto, and may not be spring-loaded. In this case, means for maintaining the closed position of the cover 58 with respect to the cap 55 may be provided. For example, the distal end of cover 58 may be detachably fixed to the cap 55 by means of friction there-between. Additionally or alternatively, the distal end of cover 58 may be detachably fixed to the cap 55 using a mechanical joint such as a latch or snap fit.

In the case where the locking element 57 has the one or more extensions 57a, the cover 58 may also prevent the locking element 57 from displacing to a position in which the connecting pin 54a can be disengaged from the locking element 57. This provides an even higher level of safety against a disconnection of the connecting pin from the socket during use.

In a further preferable embodiment, the cover 58 has a bump 58c on its outer periphery for absorbing an impact (see Fig. 3). The bump 58c comprises impact absorbable material such as rubber, elastomer, or plastic. The connector 53 is used outside, and could be handled roughly. This will inevitably lead to it falling into the ground often. The bump 58c may be formed integrally with the cover 58. Alternatively, the bump 58 may be attached to the cover 58 by means of welding, bonding, or form fitting. The bump 58c is provided at least on the side of the cover periphery facing the ground during use.

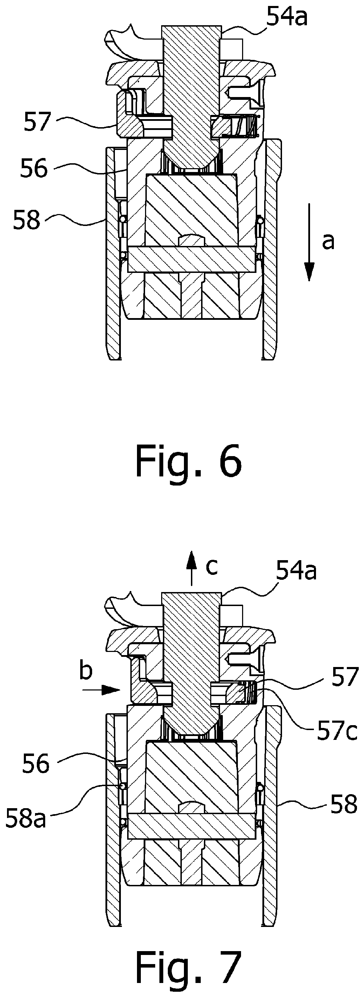

Figs. 6 and 7 depict a disconnection operation of the example connector 53 of Fig. 2. The example connector 53 requires a two-step operation: moving or pulling the cover 58 to its retracted state, preferably against the spring bias of the spring 58a, to allow for the access to the locking element 57 (see arrow 'a'); and pressing or sliding the locking element 57 into its advance position to release the engagement with the connecting pin 54a (see arrow 'b'), while keeping the cover 58 in said retracted state, allowing the connecting pin 54a to be finally pulled out from the socket 53 (see arrow 'c'). This two-step operation provides an increased level of safety against an unintentional or undesired disconnection of the connecting pin 54a from the socket 56 during use. This somewhat complex operation also provides a certain level of security against tampering therewith by children, for example.

In the preferred embodiment where the locking element 57 is spring-loaded into its engagement position with the connecting pin 54a, e.g., to its retracted position, an even higher level of safety against an unintentional or undesired disconnection of the connecting pin 54a from the socket 56 during use can be obtained.

In the preferred embodiment where the locking element has the one or more extensions 57a, an even higher level of safety against an unintentional or undesired disconnection of the connecting pin 54a from the socket 56 during use can be obtained, because the locking element 57 comes into contact with the inner periphery of the cover 58, so that it is prevented from moving to a position in which the connecting pin 54a can be disengaged from the locking element 57.

With reference now to Figs. 8 to 10, a connection operation of the example connector 53 is illustrated. For simplicity, some parts including the springs 57c, 58a are not shown. The connection operation can be performed in reverse order to the disconnection operation as explained with reference to Figs. 6 and 7. In Fig. 8, the cover 58 covers the locking element 57 to limit the access to the locking element 57, preferably with the aid of the spring bias of the spring 58a. In Fig. 9, the cover 58 needs to be moved or pulled in the direction to expose the locking element 57, preferably against the spring bias of the spring 58a (see arrow 'd'), otherwise the locking element 57 cannot be moved due to the interference between the one or more extensions 57a and the inner wall or periphery of the cover 58. In Fig. 10, a user can in turn insert the connecting pin 54a into the first hole 56a of the socket 56 and further into the engagement hole 57b of the locking element 57. The introduction surface of the engagement hole 57b converts the force received from the connecting pin 54a into the forward movement of the locking element 57 to align the first hole 56a and the engagement hole 57a with each other. The locking element 57 then returns to the retreated state to fully engages with the connecting pin 54a (Fig. 4). In this way, the locking element 57 locks the connecting pin 54a to the socket 56.

Once the connecting pin 54a is fully engaged with the locking element 57, as shown in FIG. 4, the cover 58 in turn completely closes to come into contact with the cap 55. However, in the case of incomplete or improper connection of the connecting pin 54a and the socket 56, the locking element 57 does not completely return to the retracted position. This results that the one or more extensions 57a of the locking element 57 block the cover 58 so as not to return to the closing state. The locking element 57 is thus still visible to a user. The user can therefore easily determine whether a successful connection of the connecting pin 54a and the socket 56 has been achieved, based on whether or not the locking element 57 is still visible from the cover 58. As such, the one or more extensions 57a of the locking element 57 provides an even higher level of safety regarding the completeness of the connection of the connecting pin 54a and the socket 56.

In this regard, it is preferable that the locking element 57 has a different colour from the cover 58. This further highlights such an incomplete or improper connection. The cover 58 may have a darker colour such as black or grey, whereas the locking element 57 may have a lighter colour such as yellow or red.

Figs. 11 and 12 illustrate an example connector in accordance with another embodiment of the present invention. This connector has in general the same configuration as that of the connector described above with reference to Figs. 2 to 10, except that the locking element 57 does not have the extensions 57a. Detailed description of each element will be omitted by adding the same reference numerals as those given to the connector described above. Further, for simplicity, some parts including the spring 56c, 58a are not shown.

In this example, the locking element 57 is shaped so as not to come into contact with the inner wall or periphery of the sleeve 58 in any event, even in its advance position. This design of the locking element 57 facilitates the connection operation, because the cover 58 does not need to be moved or pulled prior to the connection operation in contrast to the embodiments shown in Figs. 2 to 10. Instead, the user only needs to insert the connecting pin 54a into the first hole 56a of the socket 56 and further into the engagement hole 57b of the locking element 57 until the connecting pin 54a fully engages with the locking element 57 (see Fig. 12). For the disconnection operation, however, said two-step operation is still required, providing an increased safety against an unintentional or undesired disconnection of the connecting pin 54a from the socket 54 during use, and also against tampering therewith by children, for example.

## Claims

1. A connector (53) for connecting a trailer element (5) to a towing vehicle component, comprising:
a first part comprising a connecting pin (54a), the first part adapted to be mounted on either one of the trailer element (5) and the towing vehicle component;
a second part comprising a socket (56) adapted to be mounted on the other of the trailer element (5) and the towing vehicle component and configured to receive the connecting pin (54a);
the second part further comprising a locking element (57) configured to releasably lock the connecting pin (54a) to the socket (56); and
an access restriction means configured to limit access to the locking element (57) for the next locking or unlocking action between the connecting pin (54a) and the socket (56),
wherein the access restriction means comprises a cover (58) configured to move with respect to the socket (56) or to be detachably attached to the socket (56) to limit access to the locking element (57), preferably the cover (58) being in the form of a sleeve,
wherein the cover (58) is spring-loaded toward a position in which the cover (58) can limit the access to the locking element (57),
wherein the cover (58) is so configured as to require a user to move the cover (58) to its retracted state and maintain the cover (58) in said retracted state prior to disconnection of the connecting pin (54a) from the socket (56),
wherein the locking element (57) is arranged in a slidable manner with respect to the socket (56), the direction of slide being in a direction transverse to a longitudinal axis of the connecting pin (54a) and the socket (56), and
**characterized in that** the locking element (57) is spring-loaded into a position in which the locking element (57) engages with the connecting pin (54a).

2. The connector (53) according to claim 1, wherein the cover (58) is so configured as to require a user to move the cover (58) to its retracted state and to operate the locking element (57) prior to connection of the connecting pin (54a) to the socket (56).

3. The connector (53) according to claim 1 or 2, the locking element (57) is so configured as not to require a user to move the cover (58) to its retracted state prior to connection of the connecting pin (54a) to the socket (56).

4. The connector (53) according to any one of claims 1 to 3, wherein the connecting pin (54a) includes a circumferential groove (54c) adapted to be engaged with the locking element (57) to lock the connecting pin (54a) to the socket (56).

5. The connector (53) according to any one of claims 1 to 4, wherein the locking element (57) has one or more extensions (57a) configured, in the case of incomplete or improper connection of the connecting pin (54a) and the socket (56), to prevent the cover (58) from moving toward its access restricting position,
preferably wherein the one or more extensions (57a) are shaped and sized, at the position where the locking element (57) advances, to protrude beyond a side wall of the socket (56),
preferably wherein, in a connected state of the connecting pin (54a) and the socket (56), the one or more extensions (57a) are configured to cooperate with the cover (58) to prevent the locking element (57) from moving toward a position in which the connecting pin (54a) can be disengaged from the locking element (57).

6. The connector (53) according to any one of claims 1 to 5, wherein the locking element (57) has a different colour from the access restriction means.

7. A trailer element (5), comprising:
a main body (51) to be attached to a trailer body (2) at its first end;
a flexible link (52) attached to a second end of the main body (51); and
a connector (53) according to any one of claims 1 to 6 attached to the flexible link (52).

8. The trailer element (5) according to claim 7, wherein the flexible link (52) comprises thermoplastic polyurethane,
preferably wherein the flexible link (52) is reinforced by a wire (52c) that extends in the direction of the longitudinal axis of the connector (53).

9. The trailer element (5) according to claim 7 or 8, wherein the socket (56) comprises a hole (56b) into which an end of the flexible link (52) is inserted, the hole (56b) being provided with a curved or tapered surface whose diameter increases toward its opening end.

10. The trailer element according to claim 9, wherein the angle of the tangential line at the midpoint of the curved surface in the direction of an axis of the socket (56) or the angle (θ) of the tapered surface with respect to the longitudinal axis of the socket (56) is between approx. 10 degrees and approx. 20 degrees, preferably approx. 15 degrees.

11. A trailer (1) comprising:
a frame (2a);
two or more wheels (3) rotatably attached to the frame (2a); and
a trailer element (5) according to any one of claims 7 to 10 with a connector (53) according to any one of claims 1 to 6.

## Patentansprüche

1. Verbinder (53) zum Verbinden eines Anhängerelements (5) mit einer Zugfahrzeugkomponente, umfassend:
ein erstes Teil umfassend einen Verbindungsstift (54a), wobei das erste Teil geeignet ist, an einem von dem Anhängerelement (5) oder der Zugfahrzeugkomponente angebracht zu werden;
ein zweites Teil umfassend eine Buchse (56), geeignet ist, an dem anderen von dem Anhängerelement (5) und der Zugfahrzeugkomponente angebracht zu werden, und konfiguriert ist den Verbindungsstift (54a) aufzunehmen;
wobei das zweite Teil ferner ein Verriegelungselement (57) umfasst, das zur lösbaren Verriegelung des Verbindungsstifts (54a) an der Buchse (56) konfiguriert ist; und
ein Zugangsbeschränkungsmittel, konfiguriert, den Zugang zum Verriegelungselement (57) für die nächste Verriegelungs- oder Entriegelungsaktion zwischen dem Verbindungsstift (54a) und der Buchse (56) zu beschränken,
wobei das Zugangsbeschränkungsmittel eine Abdeckung (58) umfasst, die konfiguriert ist, sich in Bezug auf die Buchse (56) zu bewegen oder abnehmbar an der Buchse (56) angebracht zu werden, um den Zugang zum Verriegelungselement (57) zu begrenzen, wobei die Abdeckung (58) vorzugsweise in Form einer Hülse vorliegt,
wobei die Abdeckung (58) in Richtung einer Position federbelastet ist, in der die Abdeckung (58) den Zugang zum Verriegelungselement (57) begrenzen kann,
wobei die Abdeckung (58) so konfiguriert ist, dass sie von einem Benutzer vor der Trennung des Verbindungsstifts (54a) von der Buchse (56) erfordert, die Abdeckung (58) in ihren zurückgezogenen Zustand zu bewegen und die Abdeckung (58) in diesem zurückgezogenen Zustand zu halten,
wobei das Verriegelungselement (57) in Bezug auf die Buchse (56) auf verschiebbar Art und Weise angeordnet ist, wobei die Verschieberichtung in einer Richtung quer zu einer Längsachse des Verbindungsstifts (54a) und der Buchse (56) verläuft, und
**dadurch gekennzeichnet, dass** das Verriegelungselement (57) federunterstützt in eine Position gebracht ist, in der das Verriegelungselement (57) mit dem Verbindungsstift (54a) in Eingriff steht.

2. Verbinder (53) gemäß Anspruch 1, wobei die Abdeckung (58) so konfiguriert ist, dass sie von einem Benutzer vor der Verbindung des Verbindungsstifts (54a) mit der Buchse (56) erfordert, die Abdeckung (58) in ihren zurückgezogenen Zustand zu bewegen und das Verriegelungselement (57) zu betätigen.

3. Verbinder (53) gemäß Anspruch 1 oder 2, wobei das Verriegelungselement (57) so konfiguriert ist, dass sie von einem Benutzer vor der Verbindung des Verbindungsstifts (54a) mit der Buchse (56) nicht erfordert, die Abdeckung (58) in ihren zurückgezogenen Zustand zu bewegen.

4. Verbinder (53) gemäß einem der Ansprüche 1 bis 3, wobei der Verbindungsstift (54a) eine umlaufende Nut (54c) aufweist, die geeignet ist, mit dem Verriegelungselement (57) in Eingriff gebracht zu werden, um den Verbindungsstift (54a) an der Buchse (56) zu verriegeln.

5. Verbinder (53) gemäß einem der Ansprüche 1 bis 4, wobei das Verriegelungselement (57) eine oder mehrere Verlängerungen (57a) aufweist, die konfiguriert sind, im Falle einer unvollständigen oder unsachgemäßen Verbindung des Verbindungsstifts (54a) und der Buchse (56) die Abdeckung (58) zu hindern, sich hin zu ihrer zugangsbeschränkenden Position zu bewegen, vorzugsweise wobei die eine oder mehreren Verlängerungen (57a) an der Stelle, an der das Verriegelungselement (57) vorschiebt, so geformt und dimensioniert sind, dass sie über eine Seitenwand der Buchse (56) hinausragen,
vorzugsweise wobei in einem verbundenen Zustand des Verbindungsstifts (54a) und der Buchse (56) die eine oder mehreren Verlängerungen (57a) konfiguriert sind, mit der Abdeckung (58) zusammenzuwirken, um das Verriegelungselement (57) daran zu hindern, sich hin zu einer Position zu bewegen, in der der Verbindungsstift (54a) aus dem Verriegelungselement (57) gelöst werden kann.

6. Verbinder (53) gemäß einem der Ansprüche 1 bis 5, wobei das Verriegelungselement (57) eine andere Farbe als das Zugangsbeschränkungsmittel hat.

7. Anhängerelement (5), umfassend:
einen Hauptkörper (51), der an seinem ersten Ende an einem Anhängerkörper (2) angebracht werden soll;
eine flexible Verbindung (52), die an einem zweiten Ende des Hauptkörpers (51) angebracht ist; und
einen Verbinder (53) gemäß einem der Ansprüche 1 bis 6, der an der flexiblen Verbindung (52) angebracht ist.

8. Anhängerelement (5) gemäß Anspruch 7, wobei die flexible Verbindung (52) thermoplastisches Polyurethan umfasst,
vorzugsweise wobei die flexible Verbindung (52) durch einen Draht (52c) verstärkt ist, der sich in Richtung der Längsachse des Verbinders (53) erstreckt.

9. Anhängerelement (5) gemäß Anspruch 7 oder 8, wobei die Buchse (56) ein Loch (56b) umfasst, in das ein Ende der flexiblen Verbindung (52) eingeführt wird, wobei das Loch (56b) mit einer gekrümmten oder sich verjüngenden Oberfläche versehen ist, deren Durchmesser zu ihrem Öffnungsende hin zunimmt.

10. Anhängerelement gemäß Anspruch 9, wobei der Winkel der Tangente am Mittelpunkt der gekrümmten Oberfläche in Richtung einer Achse der Buchse (56) oder der Winkel (θ) der sich verjüngenden Oberfläche in Bezug auf die Längsachse der Buchse (56) zwischen etwa 10 Grad und etwa 20 Grad, vorzugsweise etwa 15 Grad, beträgt.

11. Anhänger (1), umfassend:
einen Rahmen (2a);
zwei oder mehr Räder (3), die drehbar an dem Rahmen (2a) angebracht sind; und
ein Anhängerelement (5) gemäß einem der Ansprüche 7 bis 10 mit einem Verbinder (53) gemäß einem der Ansprüche 1 bis 6.

## Revendications

1. Connecteur (53) pour connecter un élément de remorque (5) à un composant de véhicule tracteur, comprenant :
une première partie comprenant une broche de connexion (54a), la première partie étant adaptée à être montée sur l'un de l'élément de remorque (5) et du composant de véhicule tracteur ;
une deuxième partie comprenant une douille (56) adaptée à être montée sur l'autre de l'élément de remorque (5) et du composant de véhicule tracteur et configurée pour recevoir la broche de connexion (54a) ;
la deuxième partie comprenant en outre un élément de verrouillage (57) configuré pour verrouiller de manière libérable la broche de connexion (54a) à la douille (56) ; et
un moyen de restriction d'accès configuré pour limiter l'accès à l'élément de verrouillage (57) pour la prochaine action de verrouillage ou de déverrouillage entre la broche de connexion (54a) et la douille (56),
dans lequel le moyen de restriction d'accès comprend un couvercle (58) configuré pour se déplacer par rapport à la douille (56) ou pour être attaché de manière détachable à la douille (56) afin de limiter l'accès à l'élément de verrouillage (57), le couvercle (58) se présentant de préférence sous la forme d'un manchon,
dans lequel le couvercle (58) est chargé par ressort vers une position dans laquelle le couvercle (58) peut limiter l'accès à l'élément de verrouillage (57),
dans lequel le couvercle (58) est configuré de manière à obliger un utilisateur à déplacer le couvercle (58) vers son état rétracté et à maintenir le couvercle (58) dans ledit état rétracté avant de déconnecter la broche de connexion (54a) de la douille (56),
dans lequel l'élément de verrouillage (57) est agencé de manière coulissante par rapport à la douille (56), la direction de coulissement étant transversale à l'axe longitudinal de la broche de connexion (54a) et de la douille (56), et
**caractérisé en ce que**
l'élément de verrouillage (57) est chargé par ressort dans une position dans laquelle l'élément de verrouillage (57) s'engage avec la broche de connexion (54a).

2. Connecteur (53) selon la revendication 1, dans lequel le couvercle (58) est configuré de manière à obliger un utilisateur à déplacer le couvercle (58) vers son état rétracté et à actionner l'élément de verrouillage (57) avant de connecter la broche de connexion (54a) à la douille (56).

3. Connecteur (53) selon la revendication 1 ou 2, dans lequel l'élément de verrouillage (57) est configuré de manière à ne pas obliger un utilisateur à déplacer le couvercle (58) vers son état rétracté avant de connecter la broche de connexion (54a) à la douille (56).

4. Connecteur (53) selon l'une quelconque des revendications 1 à 3, dans lequel la broche de connexion (54a) inclut une rainure circonférentielle (54c) adaptée à s'engager avec l'élément de verrouillage (57) afin de verrouiller la broche de connexion (54a) à la douille (56).

5. Connecteur (53) selon l'une quelconque des revendications 1 à 4, dans lequel l'élément de verrouillage (57) comporte une ou plusieurs extensions (57a) configurées, en cas de connexion incomplète ou incorrecte de la broche de connexion (54a) et de la douille (56), pour empêcher le couvercle (58) de se déplacer vers sa position de restriction d'accès,
de préférence dans lequel lesdites une ou plusieurs extensions (57a) sont formées et dimensionnées, à la position où l'élément de verrouillage (57) avance, pour faire saillie au-delà d'une paroi latérale de la douille (56),
de préférence dans lequel, dans un état connecté de la broche de connexion (54a) et de la douille (56), lesdites une ou plusieurs extensions (57a) sont configurées pour coopérer avec le couvercle (58) afin d'empêcher l'élément de verrouillage (57) de se déplacer vers une position dans laquelle la broche de connexion (54a) peut être désengagée de l'élément de verrouillage (57).

6. Connecteur (53) selon l'une quelconque des revendications 1 à 5, dans lequel l'élément de verrouillage (57) a une couleur différente de celle du moyen de restriction d'accès.

7. Élément de remorque (5), comprenant :
un corps principal (51) destiné à être attaché à un corps de remorque (2) à sa première extrémité ;
une liaison flexible (52) attachée à une deuxième extrémité du corps principal (51) ; et
un connecteur (53) selon l'une quelconque des revendications 1 à 6 attaché à la liaison flexible (52).

8. Élément de remorque (5) selon la revendication 7, dans lequel la liaison flexible (52) comprend du polyuréthane thermoplastique,
de préférence dans lequel la liaison flexible (52) est renforcée par un fil métallique (52c) qui s'étend dans la direction de l'axe longitudinal du connecteur (53).

9. Élément de remorque (5) selon la revendication 7 ou 8, dans lequel la douille (56) comprend un trou (56b) dans lequel une extrémité de la liaison flexible (52) est insérée, le trou (56b) étant pourvu d'une surface courbe ou conique dont le diamètre augmente vers son extrémité d'ouverture.

10. Élément de remorque selon la revendication 9, dans lequel l'angle de la ligne tangentielle au point médian de la surface courbe dans la direction d'un axe de la douille (56) ou l'angle (θ) de la surface conique par rapport à l'axe longitudinal de la douille (56) se situe entre environ 10 degrés et environ 20 degrés, de préférence à environ 15 degrés.

11. Remorque (1) comprenant :
un châssis (2a) ;
deux roues ou plus (3) attachées de manière rotative au châssis (2a) ; et
un élément de remorque (5) selon l'une quelconque des revendications 7 à 10 pourvu d'un connecteur (53) selon l'une quelconque des revendications 1 à 6.
